(19) **Europäisches Patentamt**

**European Patent Office**

**Office européen des brevets**

(11) **EP 0 718 597 B1**

(12) **EUROPEAN PATENT SPECIFICATION**

(45) Date of publication and mention
of the grant of the patent:
**14.11.2001 Bulletin 2001/46**

(51) Int Cl.[7]: **G01B 21/02**, G01B 21/10

(21) Application number: **95309281.4**

(22) Date of filing: **20.12.1995**

(54) **Method of and apparatus for calculating thickness of bundle of electric wires**

Vorrichtung und Verfahren zum Berechnen der Dicke eines Bündels von elektrischen Drähten

Appareil et méthode pour calculer d'épaisseur d'un faisceau de fils électriques

(84) Designated Contracting States:
**DE FR GB IT**

(30) Priority: **21.12.1994 JP 31872794**

(43) Date of publication of application:
**26.06.1996 Bulletin 1996/26**

(73) Proprietor: **SUMITOMO WIRING SYSTEMS, LTD.
Yokkaichi City Mie 510 (JP)**

(72) Inventors:
• **Kunimi, Takeshi, c/o Sumitomo Wiring Syst. Ltd.
Yokkaichi-shi, Mie 510 (JP)**

• **Okazaki, Shinji, c/o Sumitomo Wiring Syst. Ltd.
Yokkaichi-shi, Mie 510 (JP)**

(74) Representative: **W.P. THOMPSON & CO.
Coopers Building,
Church Street
Liverpool L1 3AB (GB)**

(56) References cited:
**DE-A- 3 521 444**

• **PATENT ABSTRACTS OF JAPAN vol. 12, no. 370
(P-767), 5 October 1988 & JP 63 121706 A
(MITSUBISHI CABLE IND LTD), 25 May 1988,**

EP 0 718 597 B1

## EP 0 718 597 B1

**Description**

The present invention relates to a method of and an apparatus for calculating the diameter of a bundle of electric leads. More specifically, the present invention relates to a method of and an apparatus for pre-calculating the diameter of a bundle of electric leads of different diameters prior to the actual production of the said bundle.

One example of industrial products manufactured as a bundle of electric leads obtained by bundling electric leads of different diameters is a wiring harness. A wiring harness is an electric wiring system comprising a plurality of electric leads, terminals, connectors and the like which are incorporated into an automobile, a copying machine or the like, to form a conduction path for supplying power and signals to electrical equipment.

We refer to a "wiring harness" hereinafter as simply a "harness".

A main body portion of the harness is constructed by assembling a plurality of electric leads as described above, and the diameter thereof differs depending on the harness type and differs for each harness portion. For example, a trunk portion obtained by building most of the leads and a branch portion constructed with some of the leads branching from the trunk, respectively differ in the number of and the type of leads included therein, whereby they differ in diameter.

Description is made for a harness used for an automobile by way of example. In designing the automobile, the diameter of each portion of the harness, and the space occupied by the harness, and the like, must be considered. Particularly, the increase in the number of items of electrical equipment in the automobile with the development of electronics technology significantly increases the number of electric leads constituting the harness. Therefore, the location where the harness is to be contained must be ascertained in the design stage and must be represented on a drawing of the automobile.

Furthermore, the harness extending from an engine space to a cabin and further to a luggage space (boot) passes through a frame and a steel plate which constitute the body of the automobile. Therefore, the frame and the steel plate must be provided with holes through which the harness is to be passed. The hole must be such as to conform to the diameter of the harness. Therefore, the diameter of the harness must be specifically drawn at the time of the design.

However, the harness is a flexible device constructed by bundling a plurality of electric leads as described above. The shape and particularly the diameter of the harness is not easily specified, unlike those of the other components of the automobile.

The diameter of the harness has not been conventionally established until the time when an actual model of a harness is made in the step of producing a prototype model of an automobile. The prototype model of the harness is accepted after checking whether the harness has no interference with other automobile components.

In other words, the accurate diameter of the harness has not been established until the prototype model of it has been made.

On the other hand, not only the length of a harness (the length of electric leads constituting the harness) and the shape there of but also the diameter of each of the portions of the harness is important information in the design, for a manufacturer of such harnesses. The dimensions of the holding jigs used for assembling the harness, for example, can be determined by accurately establishing the diameter of the harness.

In designing a protector and a corrugated tube which are attached to a bundle of electric leads assembled and bundled, it is essential to know the accurate diameter of the harness.

Furthermore, it must be confirmed whether or not the diameter of the harness conforms to the value specified by the automobile manufacturer.

Additionally, in the manufacturing of harnesses, the diameter of the harness (the perimeter diameter) must be established in estimating the required amount of vinyl tape to be wound around the harness during the assembly process.

As described in the foregoing, the diameter of a harness is a value which must be accurately established before the harness is actually produced.

However, the harness is actually constructed by bundling electric leads having various different diameters, whose shape is not uniformly determined, similarly to a resin molded product and a metal workpiece. Therefore, the overall diameters of the harness is difficult to theoretically calculate and establish.

Therefore, the diameter of the harness has been conventionally estimated mainly on the basis of experience and experiments. For example, a method of taking particular electric leads of a plurality of types as samples, bundling 10 to 20 sample electric leads to measure the diameter thereof, and estimating the diameters of each of portions of the harness on the basis of its measured value has been carried out.

In such a method, however, it is difficult to correctly estimate for each harness to be produced the diameter of each of portions of the harness.

The present invention has been made with such circumstances for a background and has for its one object to provide a method of calculating the diameter of a wiring harness, in which when the type and the number of electric

2

leads constituting a harness to be produced are determined, the diameter of each of portions of the harness can be correctly calculated on the basis of the type and the number.

Another object of the present invention is to provide a calculating method which is applicable to the general design and fabrication of a bundle of electric leads for estimating overall diameter of a bundle of electric leads which is obtained by bundling a plurality of individual electric leads with higher precision when the bundle of electric leads is designed.

In accordance with the present invention there is provided a method of calculating the approximate overall diameter of a bundle of electric leads which is constructed of electric leads of a plurality of different diameters, comprising the steps of:

finding the sum of the cross-sectional areas of electric leads constituting a bundle of electric leads to be calculated;

calculating the equivalent number of electric leads required to obtain the sum of the cross-sectional areas when the bundle of electric leads to be calculated is converted into an equivalent bundle of electric leads of the same type out of the electric leads constituting the bundle of leads to be calculated; and

calculating the perimeter and/or the diameter of the equivalent bundle of electric leads which is constituted by the electric leads whose equivalent number is calculated.

Preferably, said conversion into the equivalent bundle of electric leads of the same type is made with respect to all types of electric leads constituting the bundle of electric leads to be calculated, and the equivalent number of electric leads by type is calculated.

In calculating the perimeter and the diameter from the equivalent bundle of electric leads which is constituted by the electric leads whose equivalent number is calculated, a previously calculated perimeter ratio k can be used, where the perimeter ratio k is the ratio of the diameter D of the equivalent bundle of electric leads of the same type to the diameter d of one of the electric leads constituting the bundle of electric leads, which is defined by $k = D / d$.

The perimeter ratio k can be calculated by the following formula when the number of electric leads n is in a relatively small range:

$$k = D / d = 1 + \sqrt{12n - 3} - 3 ) / \pi,$$

and

the perimeter ratio k can be calculated by the following formula when the number of electric leads n exceeds that range:

$$k = \sqrt{\frac{2\sqrt{3}n}{\pi}}$$

Some embodiments can include the step of finding the average value of the perimeters and/or the diameters of the equivalent leads by type.

The average value of the perimeters and/or the diameters of the equivalent bundles of the electric leads by type can be found, with the weights of the ratio of the cross-sectional area of each type of the electric leads to the sum of the cross-sectional areas of the electric leads constituting the bundle to be calculated.

In some cases, the perimeter and/or the diameter of the found bundle of electric leads is multiplied by a predetermined alignment correction factor.

By the use of the technique of converting a bundle of electric leads of a plurality of types which differ in diameter to a bundle of electric leads of a single type which is constituted by only electric leads of a predetermined type out of the electric leads constituting the bundle of electric leads whose diameter is to be calculated, and calculating the perimeter and the diameter of the bundle of electric leads, the overall diameter of the bundle of electric leads which is not easily calculated can be found approximately but almost correctly. When the bundle of electric leads to be calculated is converted to a bundle of electric leads of a single type with respect to all the electric leads constituting the bundle to be calculated, and the perimeters of bundles of electric leads of a single type are calculated to find the average thereof, the perimeter of the overall bundle of electric leads can be approximated more accurately.

Furthermore, a calculation using the perimeter ratio k can be performed quickly. Since the perimeter ratio k can be previously calculated and stored, the use of the perimeter ratio k is convenient for calculating the perimeter ratio k.

Additionally, it is also possible to multiply the result of the calculation by an alignment correction factor in order to more correctly adapt the result of the calculation to the size of the bundle.

The overall diameter of a bundle of electric leads represented by a wiring harness, for example, which is not easily established is uniformly approximated on the basis of the type of electric leads constituting the bundle. Particularly when an extremely thick lead or thin lead exists in the bundle, the overall diameter of the bundle can be found more accurately than when using the conventional calculating method.

Thus, in producing a wiring harness as a bundle of electric leads for example, the thickness of each portion of the wiring harness can be substantially accurately established during the design stage of the wiring harness. As a result, the design of apparatus used by a manufacturing company for producing wiring harnesses or the design of apparatus used by a company utilizing wiring harnesses, for example, an automobile manufacturer or a copying machine manufacturer, is easily performed.

Furthermore, the design of a component required for the assembling, vinyl tape, for example, can be accurately estimated for harness manufacturing.

The invention is described further hereinafter, by way of example only, with reference to the accompanying drawings, in which:-

Fig. 1 is a flow chart showing the basic concept of a method of calculating the diameter of a harness according to one embodiment of the present invention;

Fig. 2 is an illustration showing cases where the cross-section of the leads of diameter d are bundled, and when n is between 1 and 10 or 26 and 30;

Fig. 3 is a diagram explaining a method of interpolating the perimeter ratio k in a case where the number of leads is between two adjacent integers;

Fig. 4 is a cross-sectional view showing an example of the construction of a harness to be calculated;

Fig. 5 is a cross-sectional view showing where the harness to be calculated is converted into an equivalent bundle of leads of the same type;

Fig. 6 is a graph showing the comparison between the measured value of the diameter of harnesses and the diameter found by a theoretical formula according to the present invention;

Fig. 7 is a drawing showing one example of a harness in which the diameter of portions of the harness are drawn with circles of different sizes;

Fig. 8 is a block diagram showing the construction of a calculating apparatus according to one embodiment of the present invention; and

Fig. 9 is a flow chart showing the calculation procedures of the apparatus shown in Fig. 8.

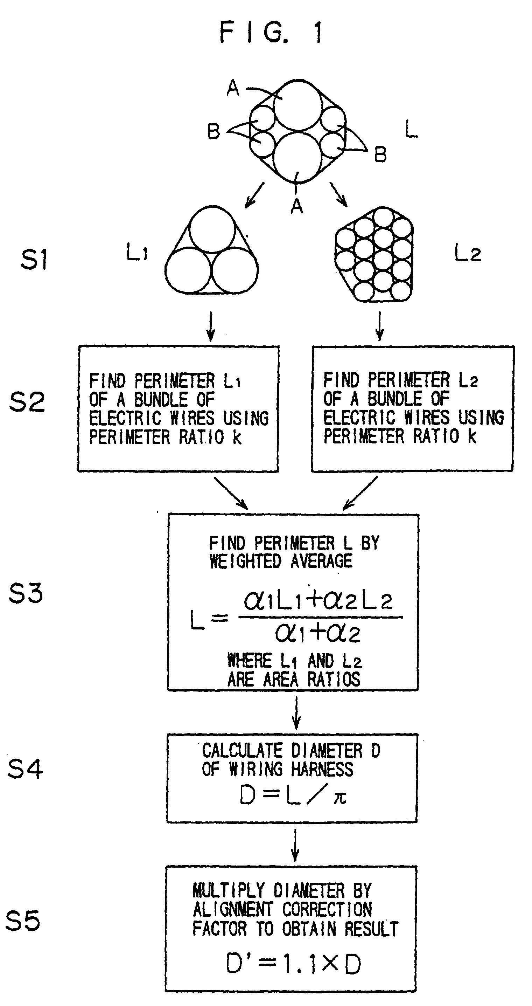

I. Fig. 1 is a flow chart showing the basic idea of a method of calculating the diameter of a bundle of leads according to one embodiment of the present invention.

Referring to Fig. 1, a description of the procedure is made for the method of calculating the diameter according to the present embodiment.

(1) A bundle of electric leads is constituted by leads of different types in the present embodiment. The bundle of leads is first converted into an equivalent bundle of leads of the same type (step S1).

The conversion is made assuming that the total cross-sectional area of the leads of the same type is kept equivalent with the original bundle of the different leads.

The conversion into an equivalent bundle of leads of the same type is made with respect to leads of all types included in the bundle whose diameter is to be calculated.

In the example shown in Fig. 1, a simple example in which a bundle of leads comprises relatively thick leads A and relatively thin leads B is illustrated. When leads of many types, for example, leads A, B, C, D, ... are included in the bundle of leads, however, the bundle of leads is converted into a bundle of leads of the same type with respect to each type of the leads A, B, C, D, ...

(2) The perimeter of the equivalent bundle of leads of the same type obtained by the conversion is then calculated (step S2).

In the example shown in Fig. 1, the perimeter $L_1$ of an equivalent bundle of leads A and the perimeter $L_2$ of an equivalent bundle of leads B are respectively calculated.

In the case of the calculation, a perimeter ratio k is used.

The perimeter ratio k is the ratio of the diameter D of the bundle of leads of the same type to the diameter d of one of the leads constituting the bundle , which is defined by the following equation:

$$k = \frac{(\pi D)}{(\pi d)} = D/d$$

The perimeter ratio k is a value determined in dependence upon the number of leads n constituting a bundle. That is, the perimeter ratio k is a value which can be strictly calculated for each number n of leads constituting the bundle. It is desired for the purpose of increasing the calculation speed that the perimeter ratio k is previously obtained in accordance with a method of calculation as described later and is stored in a memory or the like.

The calculation of the perimeter of the bundle of leads in the step S2 is performed using the perimeter ratio k previously obtained, as described above. In the example shown in Fig. 1 when the diameter d of the lead A is taken as 5 mm, for example, the perimeter $L_1$ in a case where three leads A (n = 3) are bundled is as follows, because k = 1.9549 is previously found when n = 3:

$$L_1 = \pi \times k \times d = 30.7075mm$$

(3) After the perimeters $L_1$ and $L_2$ of the respective equivalent bundles obtained by the conversion in the step S2, the weighted average, for example, of the established perimeters $L_1$ and $L_2$ of the respective equivalent bundles is established, to obtain the perimeter L of the bundle under consideration (step S3).

The weighted average is calculated, using the weight of area ratios $a_1$ and $a_2$ occupied by the leads of the respective types constituting the bundles of leads.

The simple average not with the area ratios but with the perimeters $L_1$ and $L_2$ of the respective equivalent bundles may be found and can be accepted as a resultant perimeter L of the bundle.

(4) If the established perimeter L of the bundle is divided by $\pi$, the diameter D of the bundle is obtained (step S4).

Furthermore, the established diameter D is multiplied by an alignment correction factor, to obtain the diameter D' of the bundle actually required (step S5).

The alignment correction factor is a value obtained by experiments.

In a theorectical formula for calculating the diameter D of the bundle of leads in the step 4 and the preceding steps, the leads constituting the bundle are closely tangent to each other, and are forced to be handled as leads with no clearance therebetween. On the other hand, when the cross section of the actual bundle of leads is seen, the leads are loosened, whereby there occurs a clearance therebetween. Particularly, for example, when the bundle of electric leads is a wiring harness, there always occurs a clearance therebetween. The reason for this is that the leads, in some cases, may not be linearly aligned in the longitudinal direction of the bundle.

In order to make up the difference between the theory and the practice, the diameter D is multiplied by an alignment correction factor. As a result of multiplying the diameter D by the alignment correction factor, the final diameter D' of the bundle is obtained.

The perimeter L of the bundle found in step S3 may be multiplied by the alignment correction factor. That is, the alignment correction factor x L = L' is found, after which L' is divided by $\pi$ to obtain the more precise diameter D' of the bundle.

II. Method of finding the perimeter ratio k

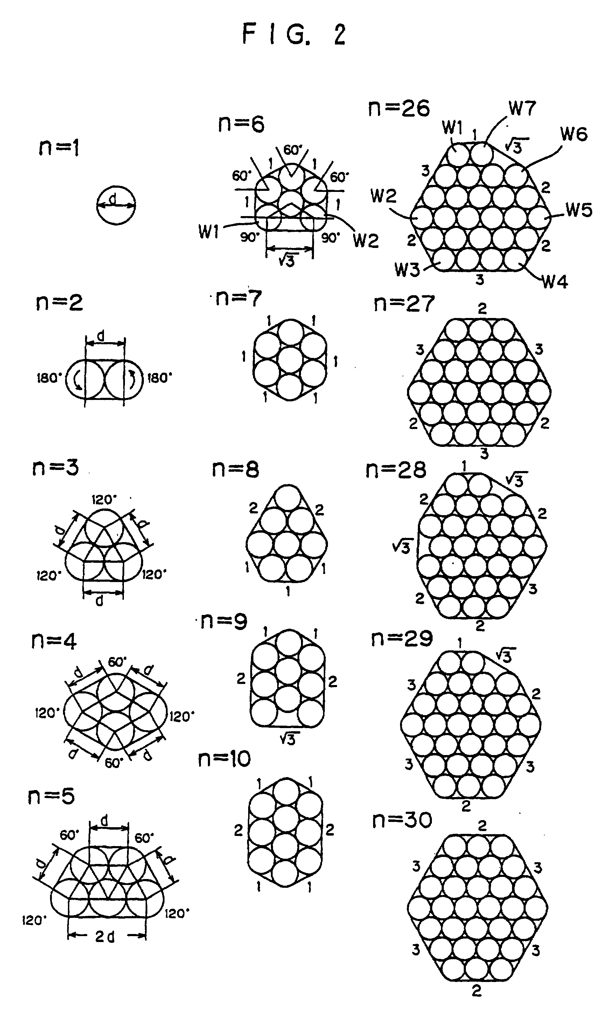

Fig. 2 shows the cross section in a case where leads having a diameter d are bundled when the number of leads n lies between 1 and 10 or 26 and 30.

Furthermore, the following Table 1 is a list showing the values of the perimeter L in a case where leads having a diameter d are bundled, the diameter of the bundle D = L / $\pi$, and the perimeter ratio k = D / d when the number of leads n lies between 1 and 30.

[ Table 1]

L (the perimeter of a lead bundle) = $\pi * k * d$,

D (the diameter of a lead bundle = $k * d$

(d : the diameter of a lead line constituting the bundle)

n : the number of leads

| | n | π*K | k | calculating method of π*k |
|---|---|---|---|---|
| **C L A S S** | 1 | $\pi$ | 1 | |
| | 2 | $\pi + 2$ | 1.6366 | |
| | 3 | $\pi + 3$ | 1.9549 | |
| | 4 | $\pi + 4$ | 2.2732 | |
| | 5 | $\pi + 5$ | 2.5916 | |
| | 6 | $\pi + 4 + \sqrt{3}$ | 2.8246 | |
| | 7 | $\pi + 6$ | 2.9099 | |
| | 8 | $\pi + 7$ | 3.2282 | Calculate strictly L/d |
| | 9 | $\pi + 6 + \sqrt{3}$ | 3.4612 | using Fig. 2 |
| | 10 | $\pi + 8$ | 3.5465 | Divide further L/d by $\pi$, |
| | 11 | $\pi + 7 + \sqrt{3}$ | 3.7795 | to calculate k |
| | 12 | $\pi + 9$ | 3.8648 | |
| | 13 | $\pi + 8 + \sqrt{3}$ | 4.0978 | (Figures can be drawn |
| | 14 | $\pi + 10$ | 4.1831 | because the number of |
| | 15 | $\pi + 9 + \sqrt{3}$ | 4.4161 | leads is small, |
| | 16 | $\pi + 11$ | 4.5014 | to obtain a strict k) |
| | 17 | $\pi + 8 + 2\sqrt{3}$ | 4.6491 | |
| | 18 | $\pi + 10 + \sqrt{3}$ | 4.7344 | $(1 <= n <= 30)$ |
| | 19 | $\pi + 12$ | 4.8197 | |
| | 20 | $\pi + 11 + \sqrt{3}$ | 5.0527 | |
| | 21 | $\pi + 13$ | 5.1380 | |
| | 22 | $\pi + 10 + 2\sqrt{3}$ | 5.2858 | |
| | 23 | $\pi + 12 + \sqrt{3}$ | 5.3710 | |
| | 24 | $\pi + 14$ | 5.4563 | |
| | 25 | $\pi + 11 + 2\sqrt{3}$ | 5.6041 | |
| | 26 | $\pi + 13 + \sqrt{3}$ | 5.6894 | |
| | 27 | $\pi + 15$ | 5.7746 | |
| | 28 | $\pi + 12 + 2\sqrt{3}$ | 5.9224 | |
| | 29 | $\pi + 14 + \sqrt{3}$ | 6.0077 | |
| | 30 | $\pi + 16$ | 6.0930 | |

Referring to Fig. 2 and Table 1, a description is made for a method of calculating the perimeter ratio k. Further, when the number of leads n is 1, the calculation can be simply performed, whereby the perimeter L = $\pi$ d, the diameter D = L / $\pi$ = d, and the perimeter ratio k = D / d = 1.

When the number of leads is 2, the distance between the centers of the adjacent two leads is d, whereby the perimeter L is L = πd + 2d, as indicated by n = 2 in Fig. 2. Accordingly, the diameter D is D = L / π = (1 + 2 / π) d = 1.6366d.

Consequently, "the perimeter ratio k = 1.6366".

Furthermore, when the number of leads n is 3, the perimeter L is comprised of a contour formed by three peripheral surfaces at an angle of 120° of each of the three leads and the distance d among the three leads, as indicated by n = 3 in Fig. 2, whereby L = πd + 3d.

Consequently, the diameter D of the bundle becomes D = L / π = (1 + 3 / π) d = 1.9549d.

Accordingly, "the perimeter ratio k = 1.9549".

Furthermore, when the number of leads n is 6, the distance between a lead w1 and a lead w2 is $\sqrt{3}d$. When the number of leads n is 6, therefore, the perimeter L is L = πd + (4 + $\sqrt{3}$) d. Consequently, the diameter D of the bundle becomes D = L / π = (1 + (4 + $\sqrt{3}$) / π) d = 2.8246d.

Consequently, "the perimeter ratio k = 2.8246".

The perimeter L in a case where leads of the same type having a diameter of d are bundled can be represented by the sum of a curved portion formed by the peripheral surfaces of the leads and the distance between the leads. The sum of the lengths of the curved portions formed by the peripheral surfaces of the leads is always πd.

In the foregoing Table 1, πk and the perimeter ratio k are represented in class 1 with respect to each of the number of leads n lies between 1 and 30. A calculating method of πk is also shown. The perimeter L of the bundle is L = π kd, and the diameter D of the bundle is D = kd;

Referring to the cross section of a bundle in a case where n = 26 shown in Fig. 2, a calculating method in a case where the number of leads n = 26 will be described.

The perimeter L of 26 leads becomes the sum πd of curved portions at a total of 360° comprising the perimeters of portions at an angle of 60° of leads w1, w2, w3, w4 and w5 and the perimeters of portions at an angle of 30° of the leads w6 and w7, and the distance 3d between the leads w1 and w2, the distance 2d between the leads w2 and w3, and the distance 3d between the leads w3 and w4, and the distance 2d between the leads w4 and w5, the distance 2d between the leads w5 and w6, and the distance √ 3d between the leads w6 and w7 , and the distance d between the leads w7 and w1.

That is,

$$L = πd + (13 + \sqrt{3}) d.$$

Accordingly, the diameter D of a bundle of 26 leads becomes D = L / π = (1 + $\sqrt{3}$)/π) d = 5.6894d.

Consequently, "the perimeter ratio k = 5.6894".

In the present embodiment, when the number of leads n lies between 1 and 30, the perimeter ratio k is strictly calculated in accordance with the foregoing calculation.

Furthermore, the calculation can be also similarly performed in a case where the number of leads n is not less than 31. In the present embodiment, however, when 31 ≤ n ≤ 127, the perimeter ratio k is found by approximate calculation using the following formula.

When the number of leads n is 1, 7, 19, 37, 61, 91 and 127, the cross section of the bundle becomes a regular hexagon. The regular hexagon is closest to a circle and is dynamically stable, and the perimeter L thereof can be accurately represented by the following equation:

$$L = πd + (\sqrt{12n-3} - 3)d$$

In the present embodiment, therefore, when 31 ≤ n ≤ 127, it is approximately considered that the foregoing formula (1) holds with respect to all values of n even in a case other than cases where n = 37, 61, 91 and 127, to calculate the perimeter ratio k. That is, when 31 ≤ n ≤ 127, the perimeter ratio k is found by the following formula (1):

$$k = D / d = L/πd$$

$$= 1 + (\sqrt{12n-3} - 3)/π \qquad (1)$$

where n is the number of leads,

$$31 ≤ n ≤ 127$$

When the number of leads n is 128 ≤ n, the cross-section of the bundle is closer to a circle, whereby the perimeter ratio k is approximately calculated by the following formula (2) approximated in a hexagonal honeycomb structure.

$$k = \sqrt{\frac{2\sqrt{3}n}{\pi}} \qquad (2)$$

A value of $\pi$k and a perimeter ratio k with respect to the typical number of leads n calculated on the basis of the foregoing formulae (1) and (2), along with a calculating method of $\pi$k, are represented in class 2 and class 3 of Table 2

[Table 2]

n : the number of leads

| | n | π*K | k | calculating method of π*k |
|---|---|---|---|---|
| C L A S S 2 | 31 | 19.3510 | 6.1596 | Calculate the perimeter ratio k by a formula $k = 1 + (\sqrt{12n-3}-3)/\pi$ (31<=n<=127) Calculate π*k from k |
| | 32 | 19.6608 | 6.2582 | |
| | 33 | 19.9658 | 6.3553 | |
| | 34 | 20.2662 | 6.4509 | |
| | 35 | 20.5622 | 6.5451 | |
| | 36 | 20.8539 | 6.6380 | |
| | 37 | 21.1416 | 6.7296 | |
| | 38 | 21.4254 | 6.8199 | |
| | 39 | 21.7055 | 6.9091 | |
| | 40 | 21.9819 | 6.9971 | |
| | 50 | 24.5752 | 7.8225 | |
| | 61 | 27.1416 | 8.6394 | |
| | 70 | 29.0725 | 9.2540 | |
| | 91 | 33.1416 | 10.5493 | |
| | 100 | 34.7393 | 11.0578 | |
| | 127 | 37.1768 | 11.8337 | |
| C L A S S 3 | 128 | 37.3229 | 11.8802 | Calculate the perimeter ratio k by a formula $k = \sqrt{2\sqrt{3}n/\pi}$ (128<=n) Calculate π*k from k |
| | 200 | 46.6536 | 14.8503 | |
| | 400 | 65.9782 | 21.0015 | |
| | 500 | 73.7658 | 23.4804 | |
| | 600 | 80.8064 | 25.7215 | |
| | 1000 | 104.3206 | 33.2063 | |

Although description was made for the perimeter ratio k in cases where the number of leads n is an integer, the number of leads n may, in some cases, be a value between adjacent integers including a decimal fraction when the bundle of leads n is converted to an equivalent bundle of leads of the same type.

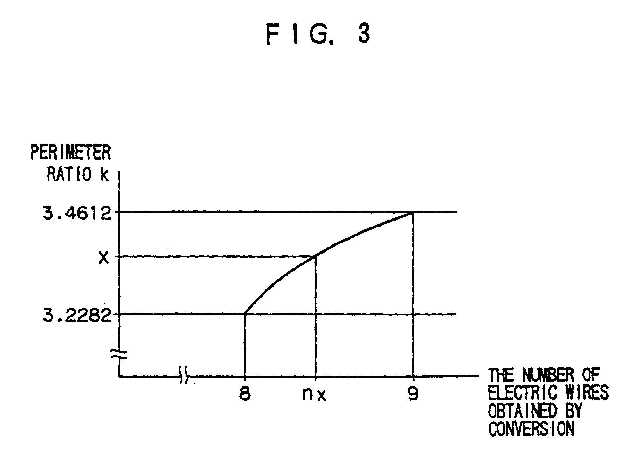

When the number of leads n obtained by the conversion is a value between two adjacent integers, the perimeter ratio k = D / d = L / $\pi$d may be interpolated. The method will be described with reference to Fig. 3.

When the number of leads $n_x$ which is a value between adjacent integers is 8 ≤ $n_x$ ≤ 9, for example, the perimeter ratio k is as follows:

$$k = \{(n_x - 8)/(9 - 8)\} * (3.4612 - 3.2282) + 3.2282$$

$$= (n_x - 8) * 0.233 + 3.2282$$

Furthermore, in a case where $31 \leq n_x \leq 127$, the calculation may be directly performed by substituting $n_x$ which is a value between adjacent integers in the formula (1).
For example, the perimeter ratio k may be:

$$k = 1 + (\sqrt{12\,n_x - 3} - 3)/\pi$$

III. Example of calculation

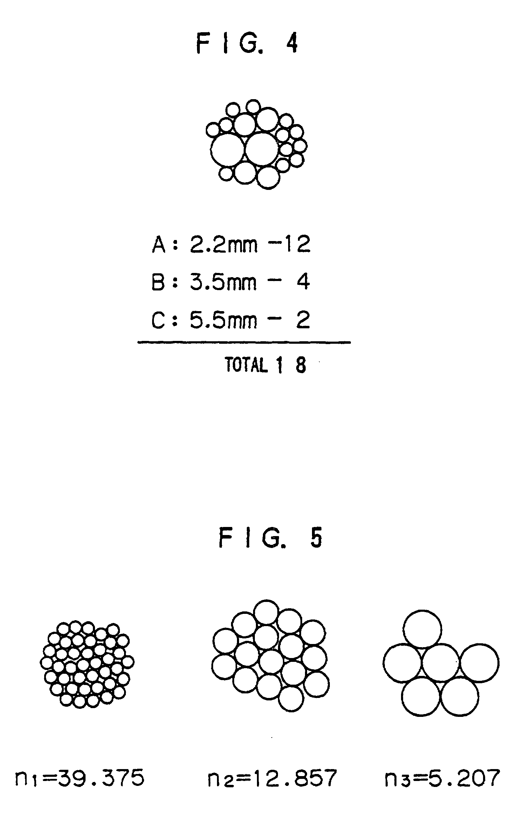

A special example of calculation using a formula according to one embodiment of the present invention will be described with reference to Figs. 4 and 5.
A harness is taken as a bundle of leads to be calculated by way of example.
As shown in Fig. 4, a harness to be calculated shall be constructed from 18 leads. That is, 12 leads having a diameter $d_1$ of 2.0mm, four leads having a diameter $d_2$ of 3.5mm, and two leads having a diameter $d_3$ of 5.5mm shall be bundled.
In this case, area weights $\alpha_1$, $\alpha_2$ and $\alpha_3$ of the leads A, B and C are respectively found by the following formulae:

The cross-sectional area of the lead A :

$$(\pi d_1^2/4) * 12 = 12\pi$$

The cross-sectional area of the lead B:

$$(\pi d_2^2/4) * 4 = 12.25\pi$$

The cross-sectional area of the lead C :

$$(\pi d_3^2/4) * 2 = 15.125\pi$$

Accordingly, the total cross-sectional area $\alpha$ becomes as follows:

$$\alpha = (12 + 12.25 + 15.125)\,\pi = 39.375\,\pi$$

Accordingly, the area weights $\alpha_1$, $\alpha_2$ and $\alpha_3$ of the electric wires A, B and C are respectively as follows:

$$\alpha_1 = \frac{12\pi}{\alpha} = \frac{12\pi}{39.375\pi} \fallingdotseq 0.3048$$

$$\alpha_2 = \frac{12.25\pi}{\alpha} = \frac{12.25\pi}{39.375\pi} \fallingdotseq 0.3111$$

$$\alpha_3 = \frac{15.125\pi}{\alpha} = \frac{15.125\pi}{39.375\pi} \fallingdotseq 0.3841$$

An equivalent is then found where the bundle of leads to be calculated is converted into an equivalent bundle of leads of the same type with respect to each of the leads A, B and C.
If the bundle of leads to be calculated is converted into an equivalent bundle of leads of the same type assuming that the total cross-sectional areas of the leads are kept the same, the following results are respectively ob-

tained:

A number $n_1$ where the bundle to be calculated is converted into an equivalent bundle of leads A:

$$n_1 = \frac{\alpha}{\pi d_1^2 / 4} = \frac{4 * 39.375\pi}{\pi d_1^2} = \frac{4 * 39.375\pi}{4\pi}$$

$$= 39.375$$

A number $n_2$ where the bundle to be calculated is converted into an equivalent bundle of leads B:

$$n_2 = \frac{\alpha}{\pi d_2^2 / 4} = \frac{4 * 39.375\pi}{\pi d_2^2} = \frac{4 * 39.375\pi}{12.25\pi}$$

$$\fallingdotseq 12.857$$

A number $n_3$ where the bundle to be calculated is converted into an equivalent bundle of leads C:

$$n_3 = \frac{\alpha}{\pi d_3^2 / 4} = \frac{4 * 39.375\pi}{\pi d_3^2} = \frac{4 * 39.375\pi}{30.25\pi}$$

$$\fallingdotseq 5.207$$

When the perimeter is calculated in accordance with the above-mentioned calculating method on the basis of the results, the following results are obtained:

A perimeter ratio $k_1$ in a case where the number of leads $n_1 = 39.375$ is as follows:

$$k_1 = \frac{n_1 - 39}{40 - 39} * (6.9971 - 6.9091) + 6.9091$$

$$= 6.9421$$

Accordingly, the perimeter $L_1$ of the equivalent bundle of leads A is as follows:

$$L_1 = k_1 \, \pi d_1$$

$$= 6.9421 * 2\pi$$

$$= 13.8841\pi$$

A perimeter ratio $k_2$ where the number of leads $n_2$ is 12.857 is as follows:

$$k_2 = \frac{n_2 - 12}{13 - 12} * (4.0978 - 3.8648) + 3.8648$$

$$\fallingdotseq 4.0645$$

Accordingly, the perimeter $L_2$ of the equivalent bundle of leads B is as follows:

$$L_2 = k_2 \, \pi d_2$$

$$= 4.0645 * \pi * 3.5$$

$$= 14.2258\pi$$

A perimeter ratio $k_3$ in a case where the number of leads $n_3$ is = 5.207 is as follows:

$$k_3 = \frac{n_3 - 5}{6 - 5} * (2.8246 - 2.5916) + 2.5916$$

$$\fallingdotseq 2.6397$$

Accordingly, the perimeter $L_3$ of the equivalent bundle of leads C is as follows:

$$L_3 = k_3 \, \pi d_3$$

$$= 2.6398 * \pi * 5.5$$

$$= 14.5186 \, \pi$$

The perimeter and the diameter of the harness obtained by further finding the weighted average, are as follows:
The perimeter L found by a weighted averaging is as follows:

$$L = L_1 * \alpha_1 + L_2 * \alpha_2 + L_3 * \alpha_3$$

$$= (13.8841 \times 0.3048 + 14.2258 \times 0.3111$$

$$+ 14.5186 * 0.3841) \, \pi$$

$$\fallingdotseq 14.2341 * \pi$$

$$= 44.7178$$

Furthermore, the diameter $D = L / \pi$ is as follows:

$$D = 14.2341$$

IV. Alignment correction factor

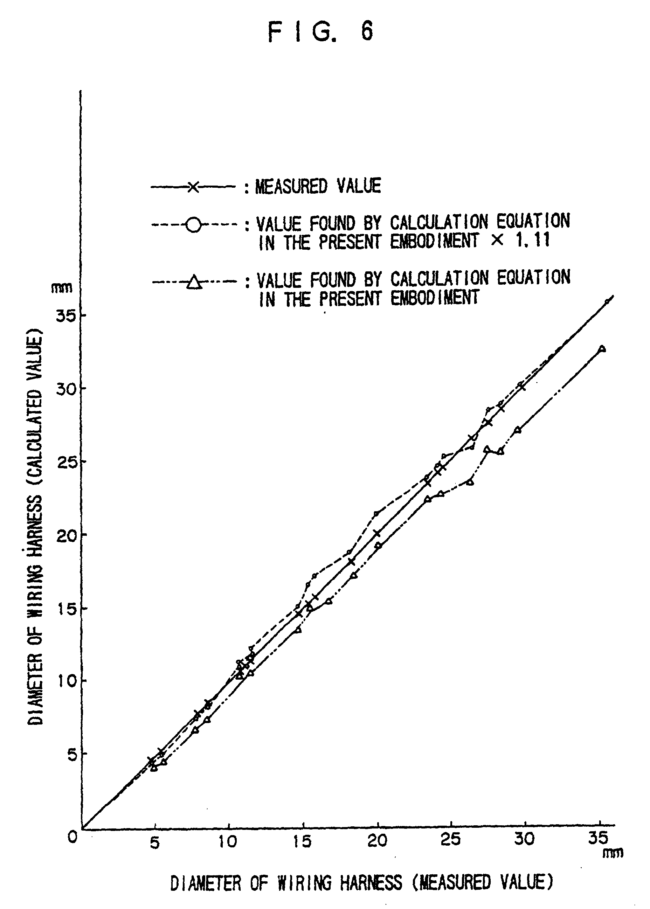

Fig. 6 shows, with respect to a wiring harness, the comparison between the measured value of the diameter of the harness and the diameter found by the theoretical calculation according to the present invention.
In Fig. 6, the horizontal axis indicates the diameter of the wiring harness (the measured value), and the vertical axis indicates the diameter of the wiring harness (the calculated value). As apparent from Fig. 6, the diameter of the harness found by the calculation becomes a value smaller by approximately 10% than the measured value when it is not multiplied by an alignment correction factor. The reason for this is conceivably that a clearance is formed between electric leads in the actual wiring harness, while there is no such clearance in the calculated value.
When the alignment correction factor is determined as 1.11, for example, to multiply the calculated value by the alignment correction factor on the basis of such a graph, therefore, the diameter of the wiring harness obtained by the calculation becomes approximately equal to the measured value.
Experiments show that the alignment correction factor takes a value in the range of 1 to 1.2 in many cases. The alignment correction factor is not a value theoretically determined but strongly relates to the manufacturing technique of wiring harnesses. The reason for this is that there is little clearance formed between the electric leads if the technique for manufacturing harnesses is high, and a clearance formed between the electric leads is reduced by the tension of a tape when the tape is wound around the bundled electric leads. Although it is preferable that the alignment correction factor is theoretically 1.0, it is considered that the alignment correction factor may be set to a suitable value in the above-mentioned range in the light of manufacturing skills.

V. Design drawing

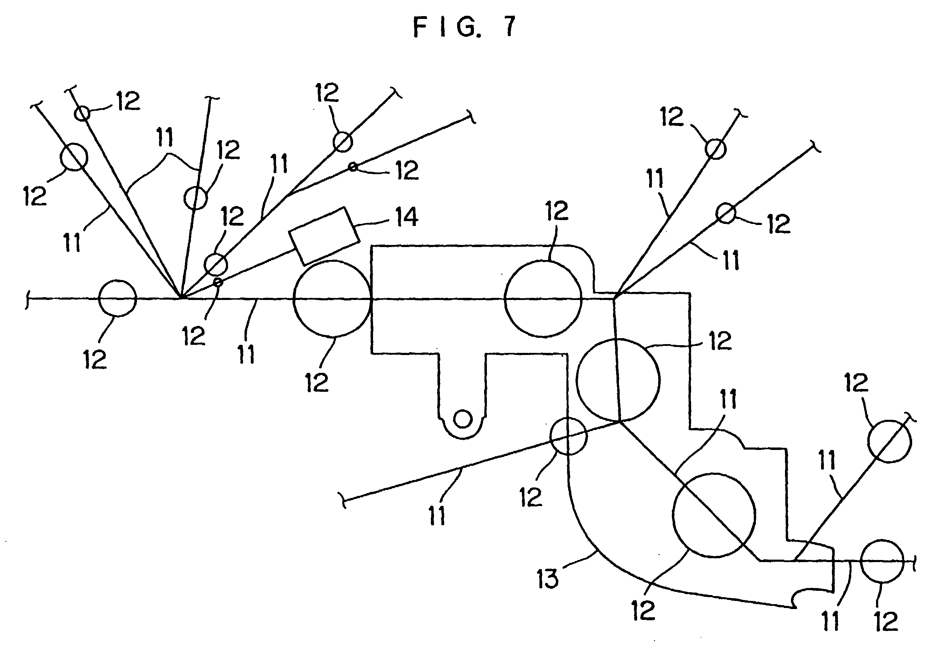

Fig. 7 shows one example of a drawing of a harness in which the diameters of the wiring harness found by the calculation of different diameters according to the present embodiment are drawn with circle lines 11 indicated by solid lines in Fig. 7 to represent the form of laying out electric leads. A circle 12 indicated by a solid line represents the diameter of the harness. Reference numeral 13 denotes the position where a protector is attached, and reference numeral 14 denotes the position where a connector is attached.

VI. Calculating apparatus

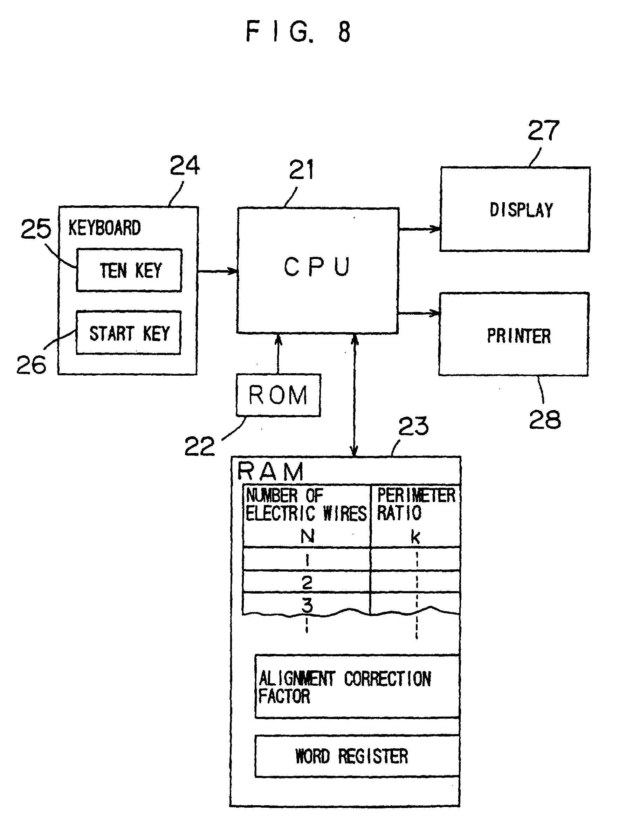

Fig. 8 is a block diagram showing the construction of an apparatus for carrying out a method of calculating the diameter a bundle of leads according to one embodiment of the present invention.

The apparatus comprises a CPU 21 serving as a processor, and a ROM 22 storing a program and a RAM 23 to and from which required data is freely written and read out are connected to the CPU 21.

Furthermore, various data can be entered from a keyboard 24 to the CPU 21. For example, data relating to leads, for example, can be entered from a ten key 25. In addition, a start key is for feeding a processing start signal as described later.

The keyboard 24 may be provided with various keys, for example, alphabet keys and an operation key in addition to the illustrated keys.

In the present embodiment, the relationship between the number of leads n and a perimeter ratio k is previously stored in the RAM 23. The perimeter ratio k is previously calculated with respect to a required range of the number of leads n (where $1 \leq n$) in accordance with the above-mentioned procedure for calculation.

The alignment correction factor is further previously set in the RAM 23. The RAM 23 is further provided with a work register for storing lead data or the like entered from the keyboard 24.

The CPU 21 executes an operation for calculating the diameter of a wiring harness, for example, serving as a bundle of leads as described later in accordance with a program stored in the ROM 22. The result of the process is displayed on a display device 27, and is printed out from a printer 28.

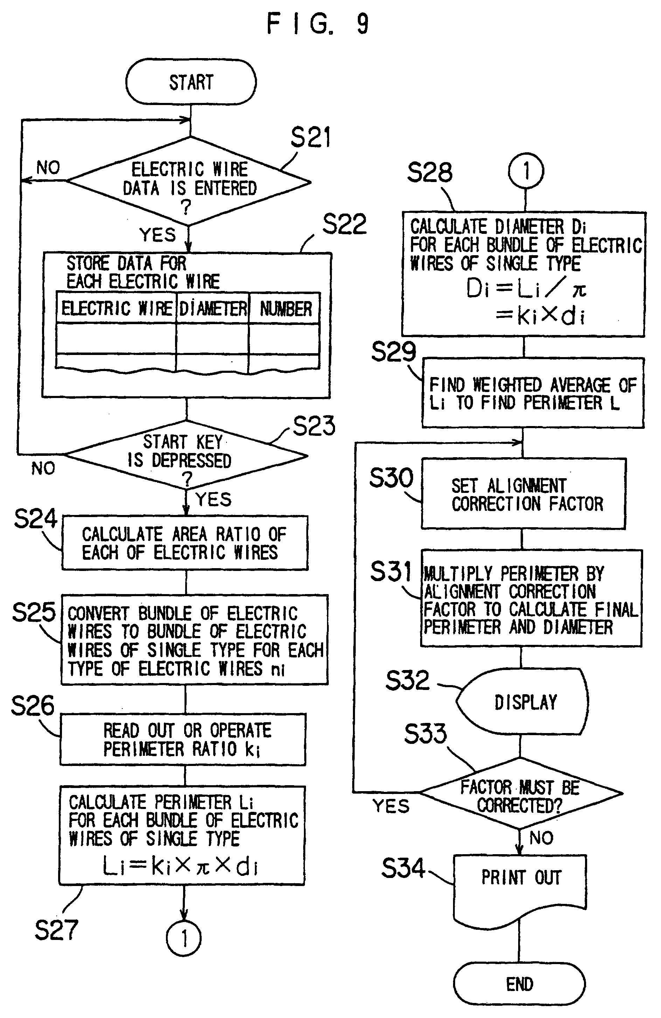

Fig. 9 is a flow chart showing the operation of the calculating apparatus shown in Fig. 8.

Description is now made of the operation of the calculating apparatus shown in Fig. 8 in accordance with the flow diagram of Fig. 9.

When the operation of the calculating apparatus is started, the CPU 21 judges whether or not lead data is entered from the keyboard 24 (step S21). If the lead data is entered, the data is stored for each lead (step S22). Consequently, the diameter and the number of leads constituting a harness whose diameter is to be calculated are given.

The CPU 21 then waits until the start key 26 is depressed (step S23), and first calculates the area ratio of each of the leads constituting the harness when the start key is turned on (step S24).

The bundle of electric leads constituting the wiring harness is converted into an equivalent bundle of leads of the same type for each type of lead constituting the harness, to find the equivalent number of leads (step S25).

The perimeter ratio k is then read out from the RAM 23. If the required perimeter ratio k is not stored in the RAM 23, the perimeter ratio k is operated calculated by the formulae previously mentioned.

For example, when the equivalent number of leads obtained by the conversion is a value between adjacent integers, for example, the perimeter ratio k is calculated in accordance with the above-mentioned procedure.

The perimeter ratio k is then used, to calculate the perimeter for each bundle of leads of the same type (step S27)

The diameter for each equivalent bundle of leads of the same type is calculated (step S28).

Thereafter, the weighted average of the perimeters is found for the equivalent bundles of leads of the same type calculated in the step S27 is found, to obtain the required perimeter L of the wiring harness (step S29).

An alignment correction factor is then set (step S30). The alignment correction factor is previousley stored in the RAM 23 in the present embodiment. Accordingly, the alignment correction factor is read out from the RAM 23, and is set (step S30).

The perimeter L found in the step S29 is then multiplied by the alignment correction factor, to calculate the final perimeter L' and the final diameter D' of the wiring harness (step S31).

The calculated perimeter L' and the calculated diameter D' are displayed on the display device 27 (step S32).

An operator confirms the display on the display device 27, and, if the alignment correction factor must be corrected, enters the necessary data for the correction.

For example, when the wiring harness is of a special construction so that the alignment correction factor must be made slightly larger than the normal or conversely, it must be made smaller, for example, the necessary data for correcting the factor is entered.

Upon judging that the factor must be corrected, the CPU 21 newly sets a factor (step S30). The perimeter L' and the diameter D' are calculated again using the new factor (step S31), and the result of the calculation is displayed on the display device 27 (step S32).

The content of the display on the display device 27 is confirmed. If the content of the display is acceptable, a signal indicating that the result of the display is to be printed out is fed, whereby the result of the calculation is printed out by the printer 28 (step S34).

**Claims**

1. A method of calculating the approximate overall diameter of a bundle of electric leads which is constructed of electric leads of a plurality of different diameters, comprising the steps of:

   finding the sum of the cross-sectional areas of electric leads constituting a bundle of electric leads to be calculated;
   calculating the equivalent number of electric leads required to obtain the sum of the cross-sectional areas when the bundle of electric leads to be calculated is converted into an equivalent bundle of electric leads of the same type out of the electric leads constituting the bundle of leads to be calculated; and
   calculating the perimeter and/or the diameter of the equivalent bundle of electric leads which is constituted by the electric leads whose equivalent number is calculated.

2. A method according to claim 1, in which said conversion into the equivalent bundle of electric leads of the same type is made with respect to all types of electric leads constituting the bundle of electric leads to be calculated, and the equivalent number of electric leads by type is calculated.

3. A method according to claim 1 or 2, in which in calculating the perimeter and the diameter from the equivalent bundle of electric leads which is constituted by the electric leads whose equivalent number is calculated, a previously calculated perimeter ratio k is used, where the perimeter ratio k is the ratio of the diameter D of the equivalent bundle of electric leads of the same type to the diameter d of one of the electric leads constituting the bundle of electric leads, which is defined by the following formula:

$$k = D/d$$

4. A method according to claim 3, wherein said perimeter ratio k is calculated by the following formula when the number of electric leads n is in a relatively small range:

$$k = D / d = 1 + (\sqrt{12n - 3} - 3) / \pi,$$

   and the perimeter ratio k is calculated by the following formula when the number of electric leads n exceeds that range:

$$k = \sqrt{\frac{2\sqrt{3n}}{\pi}}$$

5. A method according to any of claims 1 to 4, further comprising the step of finding the average value of the perimeters and/or the diameters of the equivalent leads by type.

6. A method according to claim 4, wherein the average value of the perimeters and/or the diameters of the equivalent bundles of the electric leads by type is found, with the weights of the ratio of the cross-sectional area of each type of the electric leads to the sum of the cross-sectional areas of the electric leads constituting the bundle to be calculated.

EP 0 718 597 B1

7. A method according to any of claims 1 to 6, wherein the perimeter and/or the diameter of said found bundle of electric leads are multiplied by a predetermined alignment correction factor.

**Patentansprüche**

1. Verfahren zum Errechnen des ungefähren Gesamtdurchmessers eines Bündels elektrischer Leitungen, das sich aus elektrischen Leitungen mit einer Mehrzahl unterschiedlicher Durchmesser zusammensetzt, umfassend die folgenden Schritte:

   Ermitteln der Summe der Querschnittsflächen elektrischer Leitungen, aus denen sich das zu berechnende Bündel elektrischer Leitungen zusammensetzt;
   Errechnen der äquivalenten Zahl elektrischer Leitungen, die benötigt werden, um die Summe der Querschnittsflächen zu erhalten, wenn das zu berechnende Bündel elektrischer Leitungen in ein äquivalentes Bündel elektrischer Leitungen desselben Typs aus den elektrischen Leitungen umgewandelt wird, aus denen sich das zu berechnende Leitungsbündel zusammensetzt; und
   Errechnen des Umfangs und/oder des Durchmessers des äquivalenten Bündels elektrischer Leitungen, das von den elektrischen Leitungen gebildet wird, deren äquivalente Zahl errechnet wird.

2. Verfahren nach Anspruch 1, bei dem die genannte Umwandlung in das äquivalente Bündel elektrischer Leitungen desselben Typs in Bezug auf alle Typen elektrischer Leitungen erfolgt, die das zu berechnende Bündel elektrischer Leitungen bilden, und die äquivalente Zahl elektrischer Leitungen nach Typ berechnet wird.

3. Verfahren nach Anspruch 1 oder 2, bei dem bei der Berechnung des Umfangs und des Durchmessers des äquivalenten Bündels elektrischer Leitungen, das von den elektrischen Leitungen gebildet wird, deren äquivalente Zahl berechnet wird, ein zuvor berechnetes Umfangsverhältnis k verwendet wird, wobei das Umfangsverhältnis k das Verhältnis zwischen dem Durchmesser D des äquivalenten Bündels elektrischer Leitungen desselben Typs und dem Durchmesser d einer der elektrischen Leitungen ist, die das Bündel elektrischer Leitungen bilden, wobei das Verhältnis durch die folgende Formel definiert wird:

$$k = D/d$$

4. Verfahren nach Anspruch 3, bei dem das genannte Umfangsverhältnis k anhand der folgenden Formel berechnet wird, wenn die Zahl der elektrischen Leitungen n in einem relativ kleinen Bereich liegt:

$$k = D / d = 1 + (\sqrt{12n - 3} - 3) / \pi,$$

und das Umfangsverhältnis k anhand der folgenden Formel berechnet wird, wenn die Zahl der elektrischen Leitungen n den folgenden Bereich überschreitet:

$$k = \sqrt{\frac{2\sqrt{3}n}{\pi}}$$

5. Verfahren nach einem der Ansprüche 1 bis 4, ferner umfassend den Schritt des Ermittelns des Mittelwertes der Umfänge und/oder Durchmesser der äquivalenten Leitungen nach Typ.

6. Verfahren nach Anspruch 4, bei dem der Mittelwert der Umfänge und/oder Durchmesser der äquivalenten Bündel elektrischer Leitungen nach Typ ermittelt wird, mit den Gewichtungen des Verhältnisses zwischen der Querschnittsfläche jedes Typs der elektrischen Leitungen und der Summe der Querschnittsflächen der elektrischen Leitungen, die das zu berechnende Bündel bilden.

7. Verfahren nach einem der Ansprüche 1 bis 6, bei dem der Umfang und/oder der Durchmesser des genannten ermittelten Bündels elektrischer Leitungen mit einem vorbestimmten Ausrichtungskorrekturfaktor multipliziert werden.

14

**EP 0 718 597 B1**

**Revendications**

1. Méthode pour calculer le diamètre approximatif hors-tout d'un faisceau de conducteurs électriques qui est fait de conducteurs électriques d'une pluralité de diamètres différents, comprenant les étapes consistant à :

   trouver la somme des aires de coupe transversale des conducteurs électriques constituant un faisceau de conducteurs électriques à calculer;
   calculer le nombre équivalent de conducteurs électriques requis pour obtenir la somme des aires de coupe transversale lorsque le faisceau de conducteurs électriques à calculer est converti en un faisceau équivalent de conducteurs électriques du même type à partir des conducteurs électriques constituant le faisceau de conducteurs à calculer; et
   calculer le périmètre et/ou le diamètre du faisceau équivalent de conducteurs électriques qui est constitué des conducteurs électriques dont le nombre équivalent est calculé.

2. Méthode selon la revendication 1, dans laquelle ladite conversion en le faisceau équivalent de conducteurs électriques du même type est faite par rapport à tous les types de conducteurs électriques constituant le faisceau de conducteurs électriques à calculer, et le nombre équivalent de conducteurs électriques par type est calculé.

3. Méthode selon la revendication 1 ou 2, dans laquelle en calculant le périmètre et le diamètre du faisceau équivalent de conducteurs électriques qui est constitué des conducteurs électriques dont le nombre équivalent est calculé, un rapport de périmètre k précédemment calculé est utilisé, où le rapport du périmètre k est le rapport du diamètre D du faisceau équivalent de conducteurs électriques du même type au diamètre d de l'un des conducteurs électriques constituant le faisceau de conducteurs électriques, qui est défini par la formule suivante :

$$k = D/d$$

4. Méthode selon la revendication 3, dans laquelle le rapport du périmètre k est calculé par la formule suivante lorsque le nombre de conducteurs électriques n est dans une gamme relativement petite :

$$k = D/d = 1 + (\sqrt{12n - 3} - 3)/\pi \, ,$$

   et le rapport du périmètre k est calculé par la formule suivante lorsque le nombre de conducteurs électriques n dépasse cette gamme :

$$k = \sqrt{\frac{2\sqrt{3n}}{\pi}}$$

5. Méthode selon l'une quelconque des revendications 1 à 4, comprenant en outre l'étape consistant à trouver la valeur moyenne des périmètres et/ou des diamètres des conducteurs équivalents par type.

6. Méthode selon la revendication 4, dans laquelle la valeur moyenne des périmètres et/ou diamètres des faisceaux équivalents des conducteurs électriques par type est trouvée, avec les pondérations du rapport de l'aire de coupe transversale de chaque type des conducteurs électriques à la somme des aires de coupe transversale des conducteurs électriques constituant le faisceau à calculer.

7. Méthode selon l'une quelconque des revendications 1 à 6, dans laquelle le périmètre et/ou le diamètre dudit faisceau trouvé de conducteurs électriques sont multipliés par un facteur de correction d'alignement prédéterminé.

## F I G. 1

S1

S2

FIND PERIMETER $L_1$
OF A BUNDLE OF
ELECTRIC WIRES USING
PERIMETER RATIO k

FIND PERIMETER $L_2$
OF A BUNDLE OF
ELECTRIC WIRES USING
PERIMETER RATIO k

S3

FIND PERIMETER L BY
WEIGHTED AVERAGE

$$L = \frac{\alpha_1 L_1 + \alpha_2 L_2}{\alpha_1 + \alpha_2}$$

WHERE $L_1$ AND $L_2$
ARE AREA RATIOS

S4

CALCULATE DIAMETER D
OF WIRING HARNESS
$$D = L / \pi$$

S5

MULTIPLY DIAMETER BY
ALIGNMENT CORRECTION
FACTOR TO OBTAIN RESULT

$$D' = 1.1 \times D$$

F I G. 2

EP 0 718 597 B1

17

# F I G. 3

# F I G. 4

A : 2.2mm −12

B : 3.5mm − 4

C : 5.5mm − 2

TOTAL 1 8

# F I G. 5

$n_1 = 39.375$       $n_2 = 12.857$       $n_3 = 5.207$

EP 0 718 597 B1

F I G. 6

Legend:
- ──×── : MEASURED VALUE
- ──○── : VALUE FOUND BY CALCULATION EQUATION IN THE PRESENT EMBODIMENT × 1.11
- ──△── : VALUE FOUND BY CALCULATION EQUATION IN THE PRESENT EMBODIMENT

Y-axis: DIAMETER OF WIRING HARNESS (CALCULATED VALUE) — mm

X-axis: DIAMETER OF WIRING HARNESS (MEASURED VALUE) — mm

F I G. 7

# F I G. 8

KEYBOARD 24

25 TEN KEY

26 START KEY

21 CPU

27 DISPLAY

28 PRINTER

22 ROM

23 RAM

| NUMBER OF ELECTRIC WIRES N | PERIMETER RATIO k |
|---|---|
| 1 | |
| 2 | |
| 3 | |

ALIGNMENT CORRECTION FACTOR

WORD REGISTER

EP 0 718 597 B1

## F I G. 9

**START**

S21 — ELECTRIC WIRE DATA IS ENTERED ? — NO / YES

S22 — STORE DATA FOR EACH ELECTRIC WIRE

| ELECTRIC WIRE | DIAMETER | NUMBER |
|---|---|---|
| | | |
| | | |

S23 — START KEY IS DEPRESSED ? — NO / YES

S24 — CALCULATE AREA RATIO OF EACH OF ELECTRIC WIRES

S25 — CONVERT BUNDLE OF ELECTRIC WIRES TO BUNDLE OF ELECTRIC WIRES OF SINGLE TYPE FOR EACH TYPE OF ELECTRIC WIRES $n_i$

S26 — READ OUT OR OPERATE PERIMETER RATIO $k_i$

S27 — CALCULATE PERIMETER $L_i$ FOR EACH BUNDLE OF ELECTRIC WIRES OF SINGLE TYPE
$$L_i = k_i \times \pi \times d_i$$

① 

S28 — CALCULATE DIAMETER $D_i$ FOR EACH BUNDLE OF ELECTRIC WIRES OF SINGLE TYPE
$$D_i = L_i / \pi = k_i \times d_i$$

S29 — FIND WEIGHTED AVERAGE OF $L_i$ TO FIND PERIMETER L

S30 — SET ALIGNMENT CORRECTION FACTOR

S31 — MULTIPLY PERIMETER BY ALIGNMENT CORRECTION FACTOR TO CALCULATE FINAL PERIMETER AND DIAMETER

S32 — DISPLAY

S33 — FACTOR MUST BE CORRECTED? — YES / NO

S34 — PRINT OUT

**END**

23